# FASCICULE DE BREVET EUROPEEN

(11) **EP 3 788 662 B1**
(45) Date de publication et mention de la délivrance du brevet: **17.08.2022**
(21) Numéro de dépôt: 19730190.6
(22) Date de dépôt: 30.04.2019
(51) Int. Cl.: H01M 50/204, H01M 50/249

(54) **PROCEDE D'ASSEMBLAGE D'UNE BATTERIE**
VERFAHREN ZUM ZUSAMMENBAU EINER BATTERIE
METHOD FOR ASSEMBLING A BATTERY

(30) Priorité: 03.05.2018 FR 1853812
(43) Date de publication de la demande: 10.03.2021
(73) Titulaire: Commissariat à l'Energie Atomique et aux Energies Alternatives, 75015 Paris (FR)
(72) Inventeur: MASSON, Olivier, 38054 Grenoble Cedex 09 (FR); BEL, Michel, 38054 Grenoble Cedex 09 (FR); GEVET, Dimitri, 38054 Grenoble Cedex 09 (FR)
(74) Mandataire: Regimbeau
(86) Numéro de dépôt international: PCT/FR2019/051000
(87) Numéro de publication internationale: WO 2019/211555

(56) Documents cités:
- US-A1- 2014 065 455
- US-A1- 2016 149 169
- US-A1- 2017 162 922
- US-B1- 8 920 955

## Description

### DOMAINE DE L'INVENTION

La présente invention concerne un procédé d'assemblage d'une batterie, ainsi qu'une batterie obtenue par ledit procédé.

### ETAT DE LA TECHNIQUE

Pour fabriquer une batterie, il est souvent nécessaire de relier mécaniquement plusieurs accumulateurs les uns aux autres, afin de conférer à l'ensemble une rigidité suffisante pour supporter les sollicitations mécaniques subies par la batterie pendant sa fabrication, son transport et son utilisation.

Il est connu de monter les accumulateurs dans un châssis qui est ensuite refermé par vissage, clipsage ou soudure. Dans ce cas, c'est la fermeture du châssis qui assure la solidarisation des accumulateurs et leur maintien au cours du temps.

Une alternative connue consiste à coller les accumulateurs entre eux, soit directement soit par l'intermédiaire d'un flasque qui présente des alvéoles destinées à recevoir chacun un accumulateur. La première solution présente l'avantage de la légèreté, puisqu'aucune pièce de structure n'est ajoutée. En revanche, la seconde solution présente une résistance mécanique bien supérieure à la première, car le flasque qui sert de support mécanique est dimensionné pour résister à l'environnement de la batterie.

Le document US 2014/065455 A1 décrit un casier comprenant des orifices destinés à accueillir des cellules de batterie et des orifices destinés à l'injection de colle.

Dans le cas où la batterie est assemblée par collage des accumulateurs dans un tel flasque, il existe principalement deux possibilités pour appliquer la colle. Dans un premier cas, la colle est appliquée sur les accumulateurs, puis ceux-ci sont insérés dans une alvéole respective du flasque. Dans un second cas, la colle est appliquée sur la paroi des alvéoles, puis les accumulateurs sont insérés dans leur alvéole respective. Dans les deux cas, il existe un risque important de pollution des zones des accumulateurs qui doivent rester vierges de colle, notamment les zones de contact électrique qui doivent rester propres pour assurer une faible résistance électrique entre les composants.

Par ailleurs, un tel procédé de collage se prête mal à une automatisation, de sorte qu'il est coûteux à mettre en œuvre à l'échelle industrielle.

En outre, un tel procédé de collage est susceptible d'emprisonner de l'air au niveau du cordon de colle, entre l'accumulateur et le flasque. Or, dans le cas d'une batterie pour applications aérospatiales, la batterie est soumise à des variations de pression importantes. L'air soumis à de telles variations de pression est susceptible de générer une

### EXPOSE DE L'INVENTION

Un but de l'invention est de remédier aux inconvénients précités et de concevoir un procédé d'assemblage d'une batterie qui évite la pollution des zones de contact électrique par la colle, et qui puisse être automatisé.

A cet effet, l'invention propose un procédé d'assemblage d'une batterie caractérisé en ce qu'il comprend :
- la fourniture d'un flasque comprenant au moins une alvéole traversante pour un accumulateur et au moins un orifice d'injection de colle distant de l'alvéole, en liaison fluidique par un canal d'alimentation avec un renfoncement de la paroi intérieure de l'alvéole,
- la mise en place de l'accumulateur dans ladite alvéole,
- l'injection de colle par l'orifice d'injection, la colle s'écoulant dans le canal jusqu'au renfoncement, l'accumulateur étant collé au flasque par la colle contenue dans ledit renfoncement.

La colle peut être injectée dans l'orifice par une canule reliée à une pompe d'injection de colle.

De manière avantageuse, la pompe est pilotée pour injecter une dose déterminée de colle dans l'orifice.

La canule est avantageusement actionnée par un robot.

Selon un mode de réalisation, la canule présente un embout conique et l'orifice d'injection de colle présente une portion d'entrée chanfreinée apte à guider l'insertion de l'embout de la canule dans l'orifice.

De préférence, les dimensions de l'orifice et de la canule sont choisies pour assurer une étanchéité entre la canule et l'orifice lorsque l'embout est inséré dans l'orifice.

Selon un mode de réalisation avantageux, un jeu est ménagé entre l'accumulateur et la paroi intérieure de l'alvéole de sorte à assurer une liaison fluidique du renfoncement avec l'extérieur de chaque côté du flasque, pour permettre l'évacuation de l'air chassé par la colle lors de l'injection.

Selon une forme d'exécution, chaque alvéole du flasque comprend au moins deux renfoncements, chaque renfoncement étant relié par un canal d'alimentation respectif à un orifice d'injection de colle respectif distinct, de sorte que chaque accumulateur est collé au flasque par l'intermédiaire de la colle contenue dans chacun desdits renfoncements.

Selon un mode de réalisation, l'assemblage comprend le collage d'au moins deux accumulateurs dans le flasque dans deux alvéoles adjacentes du flasque, l'orifice d'injection de colle étant en liaison fluidique avec un renfoncement dans la paroi intérieure de chaque alvéole par un canal d'alimentation respectif, de sorte que lors de l'injection de la colle dans ledit orifice, la colle s'écoule dans chaque canal d'alimentation jusqu'à un renfoncement respectif.

De manière avantageuse, la dose de colle injectée dans l'orifice est ajustée en fonction du nombre de canaux alimentés par ledit orifice.

Selon un mode de réalisation, pendant l'injection de la colle, les extrémités des accumulateurs sont alignées par un outil d'alignement d'un côté du flasque.

Un autre objet de l'invention concerne un flasque permettant la mise en oeuvre dudit procédé. Ledit flasque permet de relier mécaniquement au moins deux accumulateurs d'une batterie, et comprend au moins une alvéole traversante adaptée pour recevoir un accumulateur et au moins un orifice d'injection de colle distant de l'alvéole, en liaison fluidique par un canal d'alimentation avec un renfoncement de la paroi intérieure de l'alvéole.

De manière avantageuse, l'orifice d'injection de colle présente une extrémité borgne, le canal d'alimentation s'étendant entre une fenêtre latérale de l'orifice et le renfoncement dans la paroi intérieure de l'alvéole.

L'orifice d'injection de colle comprend avantageusement une portion d'entrée chanfreinée.

Selon un mode de réalisation, le flasque comprend une pluralité d'alvéoles agencées en quinconce.

Selon un autre mode de réalisation, le flasque comprend une pluralité d'alvéoles alignées sous forme de lignes et de colonnes.

De manière avantageuse, le flasque comprend au moins un orifice agencé à égale distance d'un groupe d'alvéoles adjacentes, et une pluralité de canaux d'alimentation reliant fluidiquement ledit orifice à un renfoncement respectif dans la paroi de chaque alvéole.

L'invention concerne également une batterie assemblée par le procédé susmentionné. Ladite batterie comprend une pluralité d'accumulateurs reliés mécaniquement les uns aux autres par un flasque tel que décrit ci-dessus, chaque accumulateur étant collé dans une alvéole du flasque par une colle contenue dans au moins un renfoncement de chaque alvéole.

Selon un mode de réalisation, chaque accumulateur est pourvu d'une gaine électriquement isolante en contact avec la colle contenue dans chaque renfoncement de l'alvéole.

### BREVE DESCRIPTION DES FIGURES

D'autres caractéristiques et avantages de l'invention ressortiront de la description détaillée qui va suivre, en référence aux dessins annexés sur lesquels :
- la figure 1 est une vue en perspective d'une batterie en cours d'assemblage selon un mode de réalisation dans lequel les accumulateurs sont de forme prismatique et sont agencés selon des lignes et des colonnes,
- la figure 2 est une vue en coupe partielle d'un flasque selon un mode de réalisation de l'invention,
- les figures 3A et 3B sont des vues en coupe partielle au niveau d'un orifice d'injection de colle, respectivement avant et après l'injection de la colle,
- la figure 4 est une vue en coupe dans un plan parallèle aux faces principales du flasque, sur laquelle est schématisée l'alimentation en colle selon l'emplacement de l'orifice d'injection,
- la figure 5 est une vue en coupe partielle d'un flasque au niveau d'un orifice d'injection de colle alimentant plusieurs alvéoles,
- la figure 6 est une vue de dessus d'une batterie selon un mode de réalisation de l'invention dans lequel les accumulateurs sont de forme cylindrique et sont agencés en quinconce,
- la figure 7 est une vue de dessous de la batterie de la figure 6,
- la figure 8 est une vue de dessous d'un flasque au niveau d'une alvéole située à la périphérie du flasque,
- la figure 9 illustre la canule d'injection de colle en position dans un orifice d'injection du flasque.

Les signes de référence identiques d'une figure à l'autre désignent des éléments identiques ou remplissant la même fonction.

### DESCRIPTION DETAILLEE DE MODES DE REALISATION DE L'INVENTION

La présente invention concerne l'assemblage d'une batterie à base de tout type d'accumulateur électrochimique, c'est-à-dire par exemple de type lithium-ion, nickel-cadmium (NiCd), nickel-hydrure métallique (NiMH), etc.

Une telle batterie est notamment destinée à être utilisée dans des applications aérospatiales, notamment pour être embarquée à bord d'un satellite. La batterie est donc soumise à des conditions vibratoires importantes et à des variations de pression élevées, qui requièrent une tenue mécanique élevée.

Pour former la batterie, chaque accumulateur est collé dans un flasque, à l'intérieur d'une alvéole respective.

Le flasque comprend deux faces principales comprenant une pluralité d'alvéoles traversantes s'étendant selon un axe non parallèle auxdites faces principales. Selon un mode de réalisation, le flasque peut présenter une forme parallélépipédique, l'axe des alvéoles étant alors avantageusement perpendiculaire aux faces principales du flasque.

La hauteur du flasque (c'est-à-dire la distance entre les faces principales, qui est par exemple de l'ordre de 20 mm) étant inférieure à la hauteur de chaque accumulateur, l'accumulateur peut dépasser d'une ou des deux faces principales du flasque. La paroi intérieure de chaque alvéole comprend au moins un renfoncement adapté pour recevoir de la colle. La forme de l'alvéole correspond à celle de l'accumulateur, avec un jeu permettant la mise en place de l'accumulateur et le passage de la colle, comme on le verra plus bas.

Ce n'est qu'après la mise en place des accumulateurs dans le flasque que la colle est injectée. L'injection de la colle étant réalisée dans un orifice du flasque distant de chaque alvéole et relié à un renfoncement par un canal d'alimentation, la circulation de la colle dans le flasque est contrôlée et en particulier ne risque pas d'engendrer de pollution des zones de contact électrique des accumulateurs.

L'agencement des alvéoles est avantageusement choisi en fonction de la forme des accumulateurs (qui peuvent être notamment cylindriques ou prismatiques) pour minimiser la distance entre des alvéoles adjacentes, ce qui a également pour effet de minimiser l'encombrement du flasque. Ainsi, par exemple, pour des accumulateurs cylindriques, les alvéoles seront avantageusement agencées en quinconce ; pour des accumulateurs prismatiques, les alvéoles seront avantageusement agencées en lignes et colonnes. Cependant, l'homme du métier pourra choisir tout autre agencement des alvéoles en fonction de la forme des accumulateurs et du circuit de colle au sein du flasque.

Bien que le procédé d'assemblage puisse être mis en oeuvre manuellement, il est avantageusement mis en oeuvre de manière entièrement automatisée.

La machine permettant la mise en oeuvre du collage est connue en elle-même et ne sera donc pas décrite ici en détail. On indiquera simplement qu'elle comprend un réservoir de colle, une pompe doseuse en liaison fluidique avec le réservoir, une canule d'injection de colle reliée à la pompe par une tubulure, et un robot adapté pour déplacer la canule selon trois axes.

La colle employée est essentiellement choisie en fonction des matériaux du flasque et de l'accumulateur, afin de présenter une compatibilité avec lesdits matériaux suffisante pour respecter le cahier des charges de tenue mécanique. En général, ce cahier des charges comprend des exigences en termes de tenue en vibration, dans la gamme de température d'utilisation de la batterie. Typiquement, la tenue en traction attendue est de l'ordre de quelques centaines de Newtons.

Le flasque présente essentiellement une fonction de support mécanique pour les accumulateurs. Il peut être réalisé en une matière plastique (par exemple polypropylène, polyétherimide (PEI), polyétheréthercétone (PEEK), acrylonitrile butadiène styrène (ABS) (liste non limitative)) ou en métal (par exemple aluminium, acier, cuivre, magnésium (liste non limitative)). Le flasque peut être fabriqué par injection dans un moule, ou par usinage d'un bloc d'un matériau adéquat, ou encore par une technique de fabrication additive (également appelée impression 3D).

Selon un mode de réalisation, les accumulateurs sont nus, c'est-à-dire que la surface extérieure de l'accumulateur est constituée de l'enveloppe rigide qui encapsule les éléments de la cellule. Cette enveloppe peut être en acier avec ou sans nickelage, en aluminium ou en plastique. Dans ce cas, la colle doit donc être compatible avec le matériau du flasque et celui de l'enveloppe de l'accumulateur.

Selon un autre mode de réalisation, les accumulateurs sont entourés d'une gaine électriquement isolante, généralement en une matière plastique telle que polypropylène, polychlorure de vinyle (PVC), polyoléfine, polytétrafluoroéthylène (PTFE) (liste non limitative). Dans ce cas, la colle doit être compatible avec le matériau du flasque et celui de la gaine. Il a cependant été constaté lors d'essais de tenue en vibration que l'élément le plus faible de l'assemblage est la gaine elle-même et non la colle. Ainsi, par exemple, des essais ont montré une tenue en traction de la colle de l'ordre de 200N, avant rupture de la gaine.

L'homme du métier est en mesure de choisir, parmi les colles disponibles sur le marché et les matériaux possibles pour le flasque, une combinaison d'un flasque, d'une colle et d'un accumulateur (éventuellement pourvu d'une gaine) qui présente la tenue mécanique souhaitée.

A titre d'exemple qui n'est en aucun cas limitatif, la colle peut être une colle époxy ou une colle vinylique.

La viscosité de la colle est avantageusement choisie en fonction du jeu disponible entre l'accumulateur et la paroi intérieure de l'alvéole. En général, plus ce jeu est faible, plus la viscosité de la colle pourra être faible. Inversement, plus ce jeu est important, plus la viscosité de la colle pourra être élevée.

A titre d'exemple non limitatif, il a été constaté qu'une colle présentant une viscosité dynamique de 190 Pa.s à 20°C est bien adaptée pour un jeu de 0,05 mm à 0,7 mm entre l'accumulateur et la paroi intérieure de l'alvéole. Dans le présent texte, le jeu s'entend comme la distance entre la surface extérieure de l'accumulateur et la paroi intérieure de l'alvéole.

Pour la mise en oeuvre du collage, le flasque est placé en position horizontale, c'est-à-dire que ses deux faces principales s'étendent dans un plan horizontal (le terme « horizontal » s'entendant dans le présent texte comme parallèle au sol du bâtiment dans lequel le procédé est mis en oeuvre). Les accumulateurs sont quant à eux en position verticale.

De manière avantageuse (non illustrée) les accumulateurs sont alignés dans un plan horizontal par un outil d'alignement adapté, tel qu'une plaque plane contre laquelle une face d'extrémité des accumulateurs vient en appui. Cet alignement permet notamment une bonne qualité de la soudure des collecteurs de courant destinés à connecter électriquement les pôles de différents accumulateurs.

Les accumulateurs peuvent être alignés dans un plan horizontal grâce à une plaque plane (non illustrée) agencée au-dessus du flasque et des moyens de poussée exerçant une poussée verticale sous chaque accumulateur vers le haut pour mettre en contact la face supérieure de chaque accumulateur contre la plaque.

De manière alternative, les accumulateurs peuvent être alignés dans un plan horizontal en reposant par gravité sur une plaque plane agencée en-dessous du flasque (les moyens de poussée mentionnés ci-dessous ne sont alors pas nécessaires).

Dans les différents modes de réalisation illustrés, la colle est injectée par le dessus du flasque, la canule étant orientée sensiblement verticalement. Cependant, l'effet de la gravité est peu important dans la circulation de la colle de l'orifice d'injection jusqu'au renfoncement dans la paroi de chaque alvéole, de sorte que la colle peut également être injectée par le dessous du flasque.

Lorsque l'injection de colle est réalisée du même côté que la plaque plane destinée à aligner les accumulateurs, ladite plaque présente des ouvertures en regard des orifices d'injection du flasque pour le passage de la canule. Cependant, l'injection de colle peut aussi être réalisée du côté opposé à la plaque plane.

Une fois que tous les accumulateurs sont en place dans le flasque, le robot de la machine de collage amène successivement la canule en regard de chaque orifice d'injection du flasque. Une dose adaptée de colle est alors injectée dans l'orifice correspondant et s'écoule dans le ou les canaux d'alimentation pour remplir un renfoncement d'une ou plusieurs alvéoles.

La colle durcit en une durée de l'ordre de quelques minutes à quelques jours selon la nature de la colle, de préférence 24h pour une colle époxy.

Le flasque pourvu des accumulateurs peut ensuite être utilisé dans d'autres étapes d'assemblage de la batterie, notamment la soudure de collecteurs de courant pour connecter électriquement les accumulateurs.

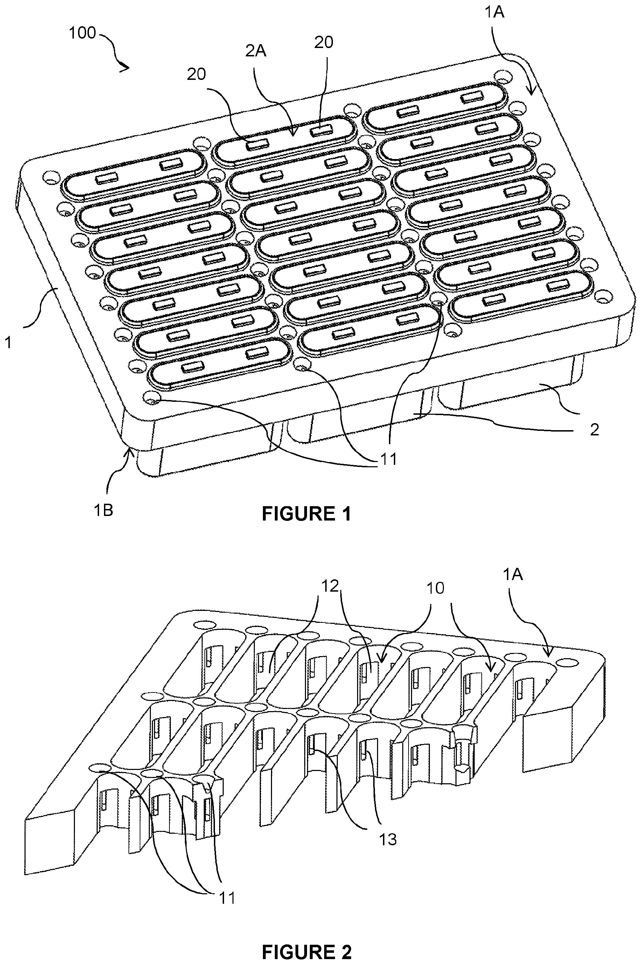

La figure 1 est une vue en perspective d'une batterie en cours d'assemblage.

Ladite batterie 100 comprend un flasque 1 et une pluralité d'accumulateurs 2 qui, dans le mode de réalisation illustré, sont de forme prismatique.

Le flasque présente une face supérieure 1A et une face inférieure 1B qui s'étendent chacune dans un plan parallèle à l'autre.

Chaque accumulateur présente deux pôles électriques 20 sur une même face (ici, la face supérieure 2A) de l'accumulateur. Les accumulateurs sont alignés les uns par rapport aux autres dans la direction verticale de sorte que la face supérieure 21 de l'ensemble des accumulateurs soit dans un même plan, parallèle à la face supérieure 1A du flasque.

Les accumulateurs sont agencés chacun dans une alvéole 10 traversante (mieux visible sur la figure 2) du flasque 1, selon des lignes et des colonnes. On obtient ainsi un agencement compact des accumulateurs, selon lequel la distance entre des accumulateurs adjacents est minimisée. Typiquement, la distance entre des accumulateurs adjacents est de l'ordre de quelques millimètres.

Le flasque 1 comprend par ailleurs une pluralité d'orifices 11 d'injection de colle.

De préférence, chaque orifice 11 présente une section circulaire, qui correspond à la section de la canule par laquelle la colle est injectée.

De manière particulièrement avantageuse, chaque alvéole est entourée de quatre orifices 11.

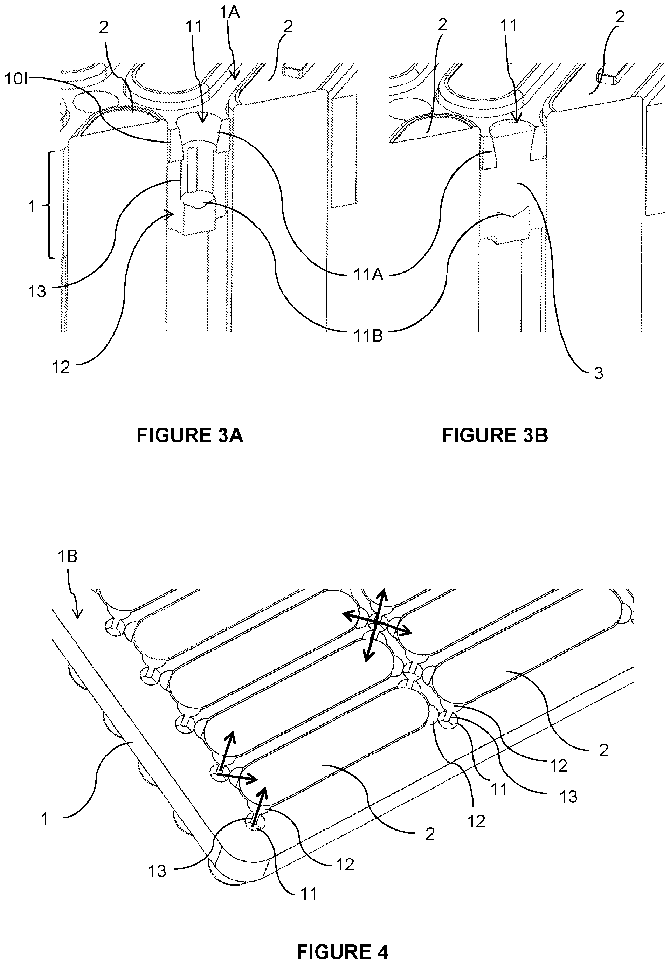

La figure 2 est une vue en perspective du flasque de la figure 1, sans les accumulateurs, et les figures 3A et 3B sont des vues en coupe partielle au niveau d'un orifice d'injection de colle de la batterie de la figure 1, respectivement avant et après injection de la colle.

Chaque alvéole 10 comprend un renfoncement 12 dans sa paroi intérieure 10l qui est en liaison fluidique avec un orifice d'injection 11 respectif.

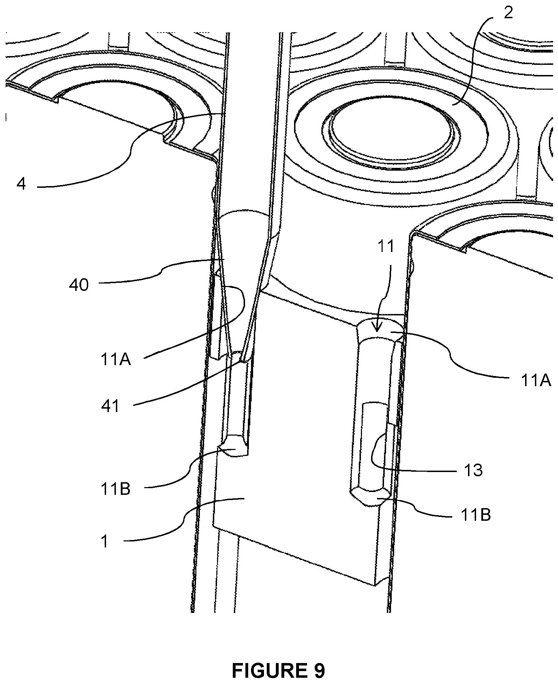

L'orifice d'injection 11 présente une portion d'entrée 11A destinée à recevoir l'embout de la canule, comme cela est représenté sur la figure 9. De manière particulièrement avantageuse, ladite portion d'entrée 11A est chanfreinée, ce qui permet de guider l'insertion de l'embout de la canule dans l'orifice, dans le cas où celui-ci n'est pas positionné par le robot exactement en regard de l'orifice 11. Par ailleurs, cette portion d'entrée chanfreinée 11A permet d'assurer une connexion étanche avec l'embout de la canule, qui est avantageusement conique.

L'extrémité 11B de l'orifice d'injection opposée à la portion d'entrée 11A est borgne, afin d'éviter que la colle ne s'écoule directement au travers du flasque.

Par ailleurs, l'orifice d'injection 11 comprend, dans sa paroi latérale, une fenêtre 13 qui débouche dans un renfoncement 12 d'une alvéole. Dans les modes de réalisation illustrés, chaque renfoncement présente une forme d'arc de cercle qui est sensiblement tangent à l'orifice. Dans ce cas, la colle injectée dans l'orifice 11 pénètre directement dans chaque renfoncement 12 au travers de la fenêtre 13 respective. Le canal d'alimentation peut donc être considéré comme la partie cylindrique de l'orifice 11, sur la hauteur de la fenêtre 13. Il est cependant possible que le renfoncement soit à une certaine distance de l'orifice, de sorte que le canal d'alimentation présente en outre un conduit s'étendant depuis la fenêtre 13 jusqu'au renfoncement. On veillera cependant à minimiser la longueur totale du canal d'alimentation pour ne pas générer de perte de charge trop importante sur le parcours de la colle.

La section du renfoncement peut être choisie par l'homme du métier, notamment en fonction du procédé de fabrication du flasque. Ainsi, lorsque le flasque est fabriqué par usinage, une section en forme de portion de cercle est particulièrement avantageuse puisqu'elle correspond au passage d'une fraise de même diamètre dans une direction perpendiculaire aux faces principales du flasque. Dans le cas où le flasque est fabriqué par injection de matière plastique ou par fabrication additive, l'homme du métier peut choisir toute autre forme réalisable avec la technique choisie.

La largeur du renfoncement et la hauteur du renfoncement définissent sensiblement la surface de contact entre la colle et l'accumulateur. Cette surface est choisie suffisamment grande pour assurer une bonne tenue mécanique de l'accumulateur dans le flasque, par exemple une surface de 5 mm x 14 mm = 70 mm² par canal suffit pour obtenir une résistance mécanique de la colle époxy supérieure à celle de la gaine.

Chaque renfoncement 12 est délimité, vers le haut, par une paroi radiale qui s'étend à partir de la paroi intérieure 10l de l'alvéole. En revanche, vers le bas, le renfoncement n'est pas délimité, de sorte que la colle peut éventuellement s'écouler vers la face inférieure du flasque, le long de l'accumulateur. Cependant, il est possible de limiter un tel écoulement en ajustant la dose de colle injectée et sa viscosité. Cette absence de délimitation du renfoncement vers le bas est dictée notamment par des contraintes de fabrication du flasque (possibilité de démoulage lorsque celui-ci est fabriqué par injection de matière plastique, ou de passage d'une fraise lorsque celui-ci est fabriqué par usinage). Un autre avantage de cette absence de délimitation est que l'air présent dans l'alvéole et chassé par la colle peut être évacué aisément vers le bas.

On notera également qu'un jeu, de quelques centièmes à quelques dixièmes de millimètres est avantageusement ménagé entre la paroi 10l de l'alvéole et la surface extérieure de l'accumulateur. Ce jeu permet d'absorber les éventuelles variations dimensionnelles des accumulateurs, mais aussi de procurer un passage vers le haut pour évacuer l'air chassé par la colle. En revanche, compte tenu des dimensions de ce passage et de la viscosité de la colle, la colle n'est pas susceptible de s'écouler vers le haut.

Grâce à ces dispositions, on évite tout emprisonnement d'air entre la colle et le flasque ou l'accumulateur. Par conséquent, même lorsque la batterie est soumise à des variations de pression importantes, ce qui est le cas par exemple lorsqu'elle est embarquée dans un satellite, où la libération du satellite dans l'espace occasionnant une brutale chute de pression, la zone de collage ne contient aucune bulle dont l'air pourrait s'échapper brusquement. La tenue du collage est donc particulièrement fiable.

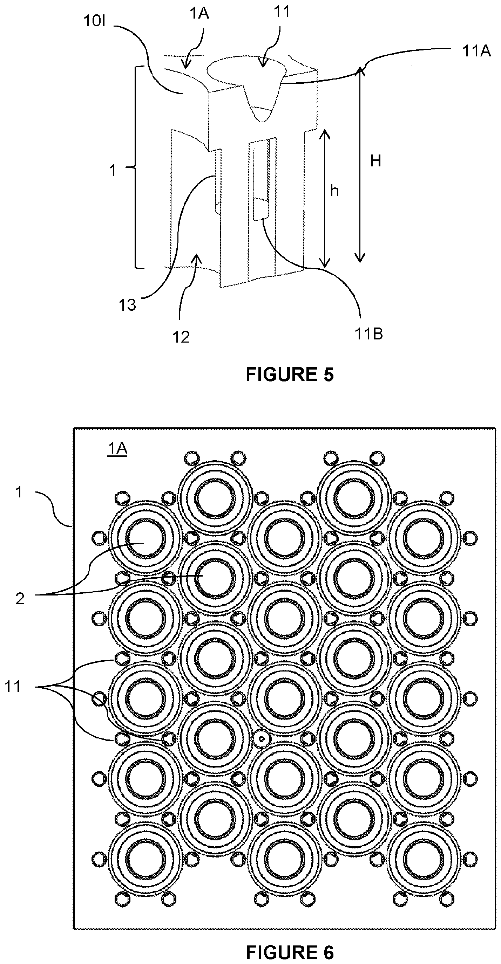

Comme illustré sur la figure 5, la hauteur h du renfoncement 12 de chaque alvéole est inférieure à la hauteur H du flasque. La différence entre H et h est avantageusement choisie suffisamment grande pour éviter tout débordement de colle par le haut de l'alvéole. Par exemple, pour un accumulateur de 18 mm de diamètre, on considère que la différence H-h doit être supérieure ou égale à 4 mm. L'homme du métier est à même d'ajuster les dimensions du renfoncement et du jeu en fonction des tolérances dimensionnelles de fabrication des accumulateurs et de la viscosité de la colle utilisée.

On précise ici que, bien que la représentation des alvéoles et de l'orifice d'injection sur les figures 2-5 soit associée à un flasque comprenant des alvéoles pour recevoir des accumulateurs prismatiques agencés en lignes et colonnes, l'enseignement concernant la conception des renfoncements, des orifices d'injection et des canaux d'alimentation est transposable à tout autre type d'accumulateur et d'agencement des alvéoles dans le flasque.

Dans l'agencement du flasque illustré sur les figures 1-5, chaque orifice d'injection 11 est, selon son emplacement, situé au voisinage d'une, deux ou quatre alvéoles. Par ailleurs, chaque alvéole comprend un renfoncement en regard de chaque orifice d'injection adjacent, relié audit orifice par un canal d'alimentation respectif. L'orifice d'injection comprend donc autant de fenêtres latérales 13 que de renfoncements d'alvéoles à alimenter.

Par conséquent, un orifice peut permettre l'injection de colle dans une ou plusieurs alvéoles, ce qui minimise le nombre d'étapes d'injection de colle pour coller l'ensemble des accumulateurs. En fonction du nombre de renfoncements à alimenter, la dose de colle injectée peut être adaptée. La pompe peut ainsi être programmée en fonction de la conception du flasque pour que, en fonction de l'orifice d'injection dans lequel est insérée la canule, la dose de colle soit suffisante pour remplir chaque renfoncement alimenté par ledit orifice.

En outre l'accumulateur est fixé dans chaque alvéole par l'intermédiaire de plusieurs zones de collage distinctes. Cela permet de renforcer la tenue mécanique de l'accumulateur en répartissant les efforts subis, mais aussi d'assurer une certaine redondance de sorte que, même si un orifice d'injection ne reçoit pas de colle, la tenue de l'accumulateur par l'intermédiaire des autres zones de collage soit suffisante pour respecter les spécifications.

Comme on le voit sur la figure 4, selon l'emplacement de chaque orifice d'injection de colle, celui-ci peut alimenter un renfoncement d'une, deux ou quatre alvéoles. La circulation de colle dans chacun de ces cas est schématisée par les flèches mais celles-ci ont été représentées plus longues que les canaux d'alimentation uniquement pour des raisons de lisibilité de la figure.

Le fait d'alimenter plusieurs renfoncements à partir d'un unique renfoncement n'est cependant techniquement envisageable que si la distance à parcourir par la colle le long des canaux d'alimentation est suffisamment courte, c'est-à-dire de l'ordre de 3 à 5 mm au maximum. En effet, dans le cas contraire, il existe un risque que la perte de charge subie par la colle empêche un remplissage correct de chaque renfoncement. Par conséquent, dans le cas où il n'est pas possible de placer un orifice d'injection à une distance suffisamment proche de deux alvéoles ou plus, il sera préférable d'alimenter un renfoncement de chaque alvéole avec un orifice d'injection dédié.

Les figures 6-9 illustrent un autre mode d'agencement des accumulateurs, dans lequel les accumulateurs sont cylindriques et sont disposés en quinconce.

Dans ce cas, les alvéoles comprennent chacune six renfoncements 12 dans leur paroi intérieure et sont entourées de six orifices 11 d'injection de colle régulièrement répartis autour de chaque alvéole, chaque renfoncement étant alimenté en colle par un orifice d'injection respectif. Chaque accumulateur est donc fixé au flasque par six zones de collage. On notera que ces six zones peuvent présenter une surface totale supérieure à la surface qui serait strictement nécessaire pour respecter le cahier des charges de tenue mécanique du collage, mais elles assurent une certaine redondance dans le cas d'un remplissage insuffisant de l'un des renfoncements et/ou de défaillance de l'une des zones de collage.

Par ailleurs, lorsqu'un orifice d'injection est situé entre deux ou trois alvéoles, il est placé à égale distance du renfoncement prévu dans chacune desdites alvéoles. Ainsi, la longueur du canal d'alimentation est identique pour chaque alvéole, ce qui assure un remplissage équilibré de l'ensemble des renfoncements.

La conception des orifices d'injection, des renfoncements et des canaux d'alimentation est similaire à celle décrite précédemment et ne sera donc pas répétée.

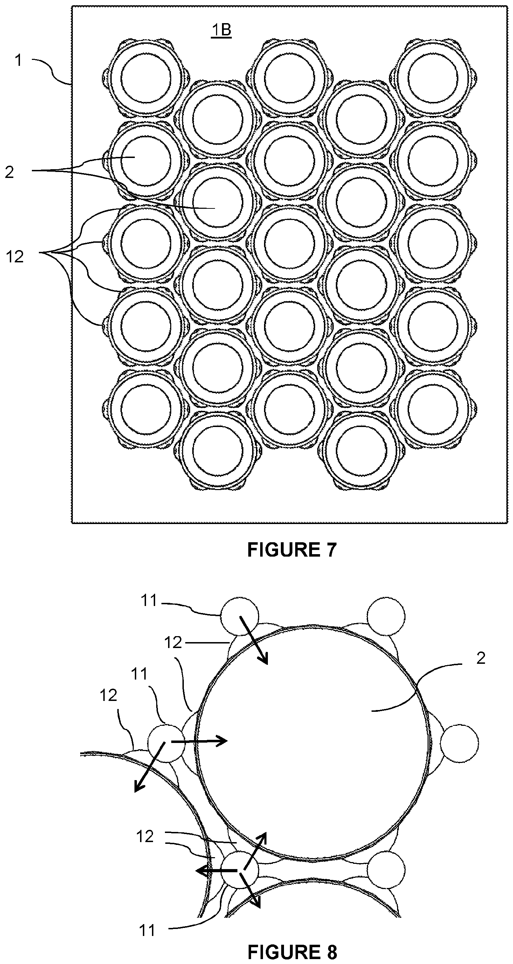

Comme on le voit sur la figure 8, selon l'emplacement de chaque orifice d'injection de colle, celui-ci peut alimenter un renfoncement d'une, deux ou trois alvéoles. La circulation de colle est schématisée par les flèches dans chacun de ces cas mais celles-ci ont été représentées plus longues que les canaux d'alimentation uniquement pour des raisons de lisibilité de la figure.

La figure 9 illustre la mise en place de la canule dans un orifice d'injection du flasque.

La canule 4 présente une forme allongée de section circulaire, de l'ordre de quelques millimètres de diamètre, avec un embout 40 en forme de cône tronqué se rétrécissant vers l'extrémité 41 de sortie de la colle.

La canule 4 est typiquement en une matière plastique et présente de ce fait une certaine flexibilité.

Par conséquent, même si le robot (non représenté) ne positionne pas la canule exactement en regard de l'orifice d'injection 11, l'embout 40 et la portion d'entrée chanfreinée 11A coopèrent pour permettre à la canule de se centrer dans l'orifice 11.

Par ailleurs, les surfaces de l'embout 40 et de la portion d'entrée 11A sont en contact mutuel et assurent une étanchéité du flasque vis-à-vis de la canule. Ainsi, les risques de remontée de la colle au travers de la portion d'entrée 11A sont supprimés.

L'embout 40 et la portion d'entrée 11A assurent également une limitation de la profondeur de pénétration de la canule dans l'orifice d'injection. L'embout 40 et la portion d'entrée 11A sont avantageusement dimensionnés pour que, lorsque la canule est en position dans l'orifice, l'extrémité 41 de la canule se trouve au-dessus de la fenêtre 13 ou au niveau du rebord supérieur de ladite fenêtre, afin de permettre un écoulement de la colle sur toute la hauteur de la fenêtre 13.

L'invention qui vient d'être décrite présente donc un certain nombre d'avantages.

D'une part, la structure globale de la batterie est relativement légère. Même si le flasque procure une masse supplémentaire par rapport à un assemblage direct des accumulateurs les uns aux autres, il est plus léger qu'un ensemble de flasques vissés tels que connu de l'état de la technique.

Par ailleurs, la conception du flasque présente des avantages supplémentaires par rapport aux solutions connues.

En effet, il se prête à une automatisation aisée du procédé de collage. Le coût de main d'oeuvre est donc faible, ce qui permet de fabriquer la batterie à un coût réduit.

D'autre part, il procure une grande fiabilité de la tenue mécanique des accumulateurs, puisque chaque accumulateur est fixé au flasque par plusieurs zones de collage (par exemple quatre dans le cas des accumulateurs prismatiques, ou six dans le cas des accumulateurs cylindriques, l'homme du métier étant à même de choisir un autre nombre en fonction de la géométrie des accumulateurs). Par conséquent, en cas de défaillance d'une zone de collage, les autres zones maintiennent la fixation de l'accumulateur dans le flasque.

Enfin, cette conception permet d'éviter emprisonner de l'air dans la zone de collage qui tient chaque accumulateur. Cet avantage est significatif pour les batteries destinées à être utilisées dans le vide (applications spatiales par exemple) car il n'y a pas de risque de dégradation de la zone de collage due à l'échappement de l'air sous vide.

## Revendications

1. Procédé d'assemblage d'une batterie (100), **caractérisé en ce qu'**il comprend :
- la fourniture d'un flasque (1) comprenant au moins une alvéole (10) traversante pour un accumulateur (2) et au moins un orifice (11) d'injection de colle distant de l'alvéole (10), en liaison fluidique par un canal d'alimentation avec un renfoncement (12) de la paroi intérieure (10l) de l'alvéole,
- la mise en place de l'accumulateur (2) dans ladite alvéole (10),
- l'injection de colle (3) par l'orifice d'injection (11), la colle s'écoulant dans le canal jusqu'au renfoncement (12), l'accumulateur (2) étant collé au flasque (1) par la colle (3) contenue dans ledit renfoncement (12).

2. Procédé selon la revendication 1, dans lequel la colle est injectée dans l'orifice par une canule (4) reliée à une pompe d'injection de colle.

3. Procédé selon la revendication 2, dans lequel la pompe est pilotée pour injecter une dose déterminée de colle dans l'orifice.

4. Procédé selon l'une des revendications 2 ou 3, dans lequel la canule est actionnée par un robot.

5. Procédé selon l'une des revendications 2 à 4, dans lequel la canule (4) présente un embout (40) conique et l'orifice (11) d'injection de colle présente une portion d'entrée (11A) chanfreinée apte à guider l'insertion de l'embout (40) de la canule dans l'orifice.

6. Procédé selon la revendication 5, dans lequel les dimensions de l'orifice (11) et de la canule (4) sont choisies pour assurer une étanchéité entre la canule (4) et l'orifice (11) lorsque l'embout est inséré dans l'orifice.

7. Procédé selon l'une des revendications 1 à 6, dans lequel un jeu est ménagé entre l'accumulateur (2) et la paroi intérieure (10l) de l'alvéole de sorte à assurer une liaison fluidique du renfoncement (12) avec l'extérieur de chaque côté du flasque (1), pour permettre l'évacuation de l'air chassé par la colle lors de l'injection.

8. Procédé selon l'une des revendications 1 à 7, dans lequel chaque alvéole (10) du flasque comprend au moins deux renfoncements (12), chaque renfoncement étant relié par un canal d'alimentation respectif à un orifice (11) d'injection de colle respectif, de sorte que chaque accumulateur est collé au flasque par l'intermédiaire de la colle contenue dans chacun desdits renfoncements.

9. Procédé selon l'une des revendications 1 à 8, comprenant le collage d'au moins deux accumulateurs (2) dans le flasque (1) dans deux alvéoles (10) adjacentes du flasque, l'orifice (11) d'injection de colle étant en liaison fluidique avec un renfoncement (12) dans la paroi intérieure de chaque alvéole par un canal d'alimentation respectif, de sorte que lors de l'injection de la colle dans ledit orifice (11), la colle s'écoule dans chaque canal d'alimentation jusqu'à un renfoncement respectif.

10. Procédé selon la revendication 9, dans lequel la dose de colle injectée dans l'orifice est ajustée en fonction du nombre de canaux alimentés par ledit orifice (11).

11. Procédé selon l'une des revendications 9 ou 10, dans lequel, pendant l'injection de la colle, les extrémités des accumulateurs (2) sont alignées par un outil d'alignement d'un côté du flasque.

12. Flasque (1) pour relier mécaniquement au moins deux accumulateurs (2) d'une batterie, **caractérisé en ce qu'**il comprend au moins une alvéole (10) traversante adaptée pour recevoir un accumulateur (2) et au moins un orifice (11) d'injection de colle distant de l'alvéole (10), en liaison fluidique par un canal d'alimentation avec un renfoncement (12) de la paroi intérieure de l'alvéole.

13. Flasque selon la revendication 12, dans lequel l'orifice (11) d'injection de colle présente une extrémité (11B) borgne, le canal d'alimentation s'étendant entre une fenêtre latérale (13) de l'orifice et le renfoncement (12) dans la paroi intérieure (10I) de l'alvéole.

14. Flasque selon l'une des revendications 12 ou 13, dans lequel l'orifice (11) d'injection de colle comprend une portion d'entrée (11A) chanfreinée.

15. Flasque selon l'une des revendications 12 à 14, comprenant une pluralité d'alvéoles (10) agencées en quinconce.

16. Flasque selon l'une des revendications 12 à 14, comprenant une pluralité d'alvéoles (10) alignées sous forme de lignes et de colonnes.

17. Flasque selon l'une des revendications 15 ou 16, comprenant au moins un orifice agencé à égale distance d'un groupe d'alvéoles adjacentes, et une pluralité de canaux d'alimentation reliant fluidiquement ledit orifice à un renfoncement respectif dans la paroi de chaque alvéole.

18. Batterie (100) comprenant une pluralité d'accumulateurs (2) reliés mécaniquement les uns aux autres par un flasque (1) selon l'une des revendications 12 à 17, chaque accumulateur étant collé dans une alvéole (10) du flasque par une colle contenue dans au moins un renfoncement (12) de chaque alvéole.

19. Batterie selon la revendication 18, dans lequel chaque accumulateur est pourvu d'une gaine électriquement isolante en contact avec la colle contenue dans chaque renfoncement de l'alvéole.

## Patentansprüche

1. Verfahren zum Zusammenbau einer Batterie (100), **dadurch gekennzeichnet, dass** es umfasst:
- Bereitstellung eines Flansches (1) mit mindestens einer durchgehenden Zelle (10) für einen Akkumulator (2) und mindestens einer von der Zelle (10) entfernten Öffnung (11) zum Einspritzen von Klebstoff, die über einen Versorgungskanal in Fluidverbindung mit einer Vertiefung (12) der Innenwand (10l) der Zelle steht,
- das Einsetzen des Akkumulators (2) in die genannte Zelle (10),
- Einspritzen von Klebstoff (3) durch die Einspritzöffnung (11), wobei der Klebstoff in den Kanal bis zur Vertiefung (12) fließt, wobei der Akkumulator (2) durch den in der Vertiefung (12) enthaltenen Klebstoff (3) an den Flansch (1) geklebt wird.

2. Verfahren nach Anspruch 1, bei dem der Klebstoff durch eine Kanüle (4), die mit einer Klebstoffeinspritzpumpe verbunden ist, in die Öffnung eingespritzt wird.

3. Verfahren nach Anspruch 2, bei dem die Pumpe so gesteuert wird, dass eine bestimmte Dosis Klebstoff in die Öffnung eingegespritzt wird.

4. Verfahren nach einem der Ansprüche 2 oder 3, bei dem die Kanüle von einem Roboter betätigt wird.

5. Verfahren nach einem der Ansprüche 2 bis 4, bei dem die Kanüle (4) eine konische Spitze (40) aufweist und die Öffnung (11) zum Einspritzen von Klebstoff einen abgeschrägten Eingangsabschnitt (11A) aufweist, der geeignet ist, das Einführen der Spitze (40) der Kanüle in die Öffnung zu führen.

6. Verfahren nach Anspruch 5, wobei die Abmessungen der Öffnung (11) und der Kanüle (4) so gewählt werden, dass eine Abdichtung zwischen der Kanüle (4) und der Öffnung (11) gewährleistet ist, wenn das Mundstück in die Öffnung eingeführt wird.

7. Verfahren nach einem der Ansprüche 1 bis 6, bei dem zwischen dem Akkumulator (2) und der Innenwand (10l) der Zelle ein Spielraum geschaffen wird, um eine Fluidverbindung der Vertiefung (12) mit der Außenseite auf jeder Seite des Flansches (1) zu gewährleisten, damit die Luft, die beim Einspritzen durch den Klebstoff verdrängt wird, evakuiert werden kann.

8. Verfahren nach einem der Ansprüche 1 bis 7, bei dem jede Zelle (10) des Flansches mindestens zwei Vertiefungen (12) aufweist, wobei jede Vertiefung über einen jeweiligen Zuführkanal mit einer jeweiligen Klebstoffeinspritzöffnung (11) verbunden ist, so dass jeder Akkumulator über den in jeder der Vertiefungen enthaltenen Klebstoff an den Flansch geklebt wird.

9. Verfahren nach einem der Ansprüche 1 bis 8, umfassend das Verkleben von mindestens zwei Akkumulatoren (2) im Flansch (1) in zwei benachbarten Zellen (10) des Flansches, wobei die Klebstoffeinspritzöffnung (11) über einen jeweiligen Zuführkanal mit einer Vertiefung (12) in der Innenwand jeder Zelle in Fluidverbindung steht, so dass beim Einspritzen des Klebstoffs in die Öffnung (11) der Klebstoff in jedem Zuführkanal bis zu einer jeweiligen Vertiefung fließt.

10. Verfahren nach Anspruch 9, bei dem die in die Öffnung eingespritzte Klebstoffdosis entsprechend der Anzahl der von der Öffnung (11) versorgten Kanäle angepasst wird.

11. Verfahren nach einem der Ansprüche 9 oder 10, bei dem während des Einspritzens des Klebstoffs die Enden der Akkumulatoren (2) durch ein Ausrichtungswerkzeug auf einer Seite des Flansches ausgerichtet werden.

12. Flansch (1) zum mechanischen Verbinden von mindestens zwei Akkumulatoren (2) einer Batterie, **dadurch gekennzeichnet, dass** er mindestens eine durchgehende Zelle (10), die zur Aufnahme eines Akkumulators (2) geeignet ist, und mindestens eine von der Zelle (10) entfernte Öffnung (11) zum Einspritzen von Klebstoff umfasst, die über einen Versorgungskanal in Fluidverbindung mit einer Vertiefung (12) der Innenwand der Zelle steht.

13. Flansch nach Anspruch 12, bei dem die Klebstoffeinspritzöffnung (11) ein Blindende (11B) aufweist, wobei sich der Zuführkanal zwischen einem Seitenfenster (13) der Öffnung und der Vertiefung (12) in der Innenwand (10l) der Zelle erstreckt.

14. Flansch nach einem der Ansprüche 12 oder 13, wobei die Klebstoffeinspritzöffnung (11) einen abgeschrägten Einlassabschnitt (11A) aufweist.

15. Flansch nach einem der Ansprüche 12 bis 14, der eine Vielzahl von versetzt angeordneten Zellen (10) umfasst.

16. Flansch nach einem der Ansprüche 12 bis 14, der eine Vielzahl von Zellen (10) umfasst, die in Form von Zeilen und Spalten ausgerichtet sind.

17. Flansch nach einem der Ansprüche 15 oder 16, mit mindestens einer Öffnung, die in gleichem Abstand von einer Gruppe benachbarter Zellen angeordnet ist, und einer Vielzahl von Zuführungskanälen, die die Öffnung mit einer entsprechenden Vertiefung in der Wand jeder Zelle fluidisch verbinden.

18. Batterie (100) mit einer Vielzahl von Akkumulatoren (2), die durch einen Flansch (1) nach einem der Ansprüche 12 bis 17 mechanisch miteinander verbunden sind, wobei jeder Akkumulator in einer Zelle (10) des Flansches durch einen Klebstoff verklebt ist, der in mindestens einer Vertiefung (12) jeder Zelle enthalten ist.

19. Batterie nach Anspruch 18, wobei jeder Akkumulator mit einer elektrisch isolierenden Hülle versehen ist, die mit dem in jeder Vertiefung der Zelle enthaltenen Klebstoff in Kontakt steht.

## Claims

1. A method of assembling a battery (100), **characterised in that** it comprises :
- providing a flange (1) comprising at least one through cell (10) for an accumulator (2) and at least one glue injection opening (11) distant from the cell (10), in fluid connection via a supply channel with a recess (12) in the inner wall (101) of the cell,
- placing the accumulator (2) in said cell (10),
- injecting glue (3) through the injection opening (11), the glue flowing through the channel to the recess (12), the accumulator (2) being glued to the flange (1) by the glue (3) contained in said recess (12).

2. Method according to claim 1, wherein the glue is injected into the opening through a cannula (4) connected to a glue injection pump.

3. Method according to claim 2, wherein the pump is controlled to inject a set dose of glue into the opening.

4. Method according to any of claims 2 or 3, wherein the cannula is operated by a robot.

5. Method according to any of claims 2 to 4, wherein the cannula (4) has a tapered tip (40) and the glue injection opening (11) has a chamfered inlet portion (11A) adapted to guide the insertion of the cannula tip (40) into the opening.

6. Method according to claim 5, wherein the dimensions of the opening (11) and the cannula (4) are selected to provide a seal between the cannula (4) and the opening (11) when the tip is inserted into the opening.

7. Method according to any of claims 1 to 6, wherein a clearance is provided between the accumulator (2) and the inner wall (101) of the cell so as to ensure a fluid connection of the recess (12) with the outside of each side of the flange (1), in order to allow the evacuation of the air expelled by the glue during the injection.

8. Method according to any of claims 1 to 7, wherein each cell (10) of the flange comprises at least two recesses (12), each recess being connected by a respective supply channel to a respective glue injection opening (11), so that each accumulator is glued to the flange by means of the glue contained in each of said recesses.

9. Method according to any of claims 1 to 8, comprising gluing at least two accumulators (2) in the flange (1) in two adjacent cells (10) of the flange, the glue injection opening (11) being in fluid connection with a recess (12) in the inner wall of each cell via a respective supply channel, so that upon injection of the glue into said opening (11), the glue flows through each supply channel to a respective recess.

10. Method according to claim 9, wherein the dose of glue injected into the opening is adjusted according to the number of channels supplied through said opening (11).

11. Method according to any of claims 9 or 10, wherein, during the injection of the glue, the ends of the accumulators (2) are aligned by an alignment tool on one side of the flange.

12. A flange (1) for mechanically connecting at least two accumulators (2) of a battery, **characterised in that** it comprises at least one through cell (10) adapted to receive an accumulator (2) and at least one glue injection opening (11) distant from the cell (10), in fluid connection via a supply channel with a recess (12) in the inner wall of the cell.

13. Flange according to claim 12, wherein the glue injection opening (11) has a blind end (11B), the supply channel extending between a side window (13) of the opening and the recess (12) in the inner wall (101) of the cell.

14. Flange according to any of claims 12 or 13, wherein the glue injection opening (11) comprises a chamfered inlet portion (11A).

15. Flange according to any of claims 12 to 14, comprising a plurality of cells (10) arranged in a staggered pattern.

16. Flange according to any of claims 12 to 14, comprising a plurality of cells (10) aligned in rows and columns.

17. Flange according to any of claims 15 or 16, comprising at least one opening arranged equidistant from a group of adjacent cells, and a plurality of supply channels fluidly connecting said opening to a respective recess in the wall of each cell.

18. A battery (100) comprising a plurality of accumulators (2) mechanically connected to each other by a flange (1) according to any of claims 12 to 17, each accumulator being glued in a cell (10) of the flange by a glue contained in at least one recess (12) of each cell.

19. Battery according to claim 18, wherein each accumulator is provided with an electrically insulating sheath in contact with the glue contained in each recess of the cell.
